# EUROPEAN PATENT SPECIFICATION

(11) **EP 3 508 343 B1**
(45) Date of publication and mention of the grant of the patent: **27.09.2023**
(21) Application number: 19150664.1
(22) Date of filing: 08.01.2019
(51) Int. Cl.: B32B 27/08, B32B 27/12, B32B 27/18, B32B 27/20, B32B 27/28, B32B 27/34, B32B 37/00

(54) **THERMOPLASTIC COMPOSITE LAMINATE WITH ULTRAVIOLET PROTECTION AND METHOD OF FORMING THE SAME**
THERMOPLASTISCHES VERBUNDLAMINAT MIT UV-SCHUTZ UND VERFAHREN ZUR FORMUNG DAVON
STRATIFIÉ COMPOSITE THERMOPLASTIQUE AVEC PROTECTION À ULTRAVIOLETS ET SON PROCÉDÉ DE FORMATION

(30) Priority: 09.01.2018 US 201815865451
(43) Date of publication of application: 10.07.2019
(73) Proprietor: The Boeing Company, Arlington, VA 22202 (US)
(72) Inventor: CHILDERS, Christopher H., Huntington Beach, CA California 92647 (US); BOGUCKI, Gregg R., Huntington Beach, CA California 92647 (US)
(74) Representative: Morrall, Jonathan Ian McLachlan

(56) References cited:
- US-A1- 2016 023 433
- US-B2- 9 550 330

## Description

### FIELD

The present application relates to thermoplastic composite materials, and is particularly directed to a thermoplastic composite laminate with ultraviolet protection and method of forming the same.

### BACKGROUND

A known way of processing a thermoplastic composite material to manufacture a thermoplastic composite laminate that can be subsequently formed into a thermoplastic composite part is to use a method of manufacture known as continuous compression molding. In this manufacturing method, a continuous process is provided for the consolidation of thermoplastic pre-preg material into a thermoplastic composite laminate. The thermoplastic composite laminate can be of a single thickness, multiple thicknesses, or variable thicknesses.

Another known way of processing a thermoplastic material to manufacture a thermoplastic composite laminate is to use a method of manufacture known as press consolidation, which can be accomplished by either a "static" process or a "shuttle" process. In the static process, a large surface area press is used in which thermoplastic pre-preg material is heated, smashed into a consolidated thermoplastic laminate, and then cooled. In the shuttle process, multiple presses with variable temperatures are used in which thermoplastic pre-preg material is converted to a consolidated thermoplastic composite laminate.

In both methods of manufacture, the cooling of the consolidated thermoplastic composite laminate is controlled to achieve desired properties. The consolidated thermoplastic composite laminate can then be thermo-formed into a final desired shape, if the laminate is not already in the final desired shape, to provide a thermoplastic composite part. The thermoplastic composite part can be exposed to ultraviolet radiation during its service life. For example, the thermoplastic composite part may comprise a part used in an aerospace application. As a result, ultraviolet degradation damage of the thermoplastic composite part may be observed during its service life.

Accordingly, those skilled in the art continue with research and development efforts in the field of processing thermoplastic composite materials and laminates for making thermoplastic composite parts for aerospace applications.

US 2016/0023433 states, according to its abstract, a thermoplastic composite prepreg tape is disclosed. The prepreg tape is optimized for high-speed, high quality in-situ consolidation during automated fiber placement. Embodiments of the prepreg tape have uniform dimensions (cross section, width, and thickness), uniform energy absorption, uniform surface roughness, and sufficient resin at the surface to affect a bond between layers. A scattering agent is used in a polymer surface layer to enable a combination of scattering and absorption in the polymer surface layer.

US 9,550,330 B2 states, according to its abstract, a plurality of thermoplastic composite structures are laminated to each other in a lay-up arrangement to form a laminate. Each thermoplastic composite structure is composed of a core composite layer and a surface layer polymer applied to opposing surfaces of the core composite layer. The core composite layer is composed of a fibrous substrate and one or more high performance polymers, which crystallize at a faster rate than the surface layer polymer.

### SUMMARY

In a first aspect, a consolidated thermoplastic composite laminate with ultraviolet protection is provided. The consolidated thermoplastic composite laminate with ultraviolet protection comprises at least one ply of thermoplastic pre-preg material. The consolidated thermoplastic composite laminate with ultraviolet protection also comprises a polymer film positioned on a side of the at least one ply of thermoplastic pre-preg material. The polymer film imparts ultraviolet protection to the thermoplastic pre-preg material after the polymer film and the thermoplastic pre-preg material are heated to a temperature sufficient to consolidate the polymer film and the thermoplastic pre-preg material and thereby to provide the consolidated thermoplastic composite laminate with ultraviolet protection. The consolidated thermoplastic composite laminate with ultraviolet protection further comprises at least one ply of reinforcement material disposed between the polymer film and the at least one ply of thermoplastic pre-preg material.

In a second aspect, a method of forming a consolidated thermoplastic composite laminate with ultraviolet protection of the first aspect is provided. The method comprises selecting at least one ply of thermoplastic pre-preg material, applying on a side of the selected at least one ply of thermoplastic pre-preg material at least one ply of reinforcement material, and applying on a side of the selected at least one ply of thermoplastic pre-preg material a polymer film that comprises a polymer component and an ultraviolet stabilizer component. The method also comprises consolidating the thermoplastic pre-preg material and the applied polymer film to provide the consolidated thermoplastic composite laminate with ultraviolet protection.

In an example, a method of forming a consolidated thermoplastic composite part with ultraviolet protection is provided. The method comprises selecting a thermoplastic pre-preg material that includes a select one of poly ether ether ketone (PEEK), poly ether ketone ketone (PEKK), poly phenylene sulfide (PPS), polyamide (PA), poly ether imide (PEI), and poly aryl ether ketone (PAEK). The method also comprises applying on a side of the selected thermoplastic pre-preg material a polymer film comprising an ultraviolet protection additive that includes a select one of carbon black, titanium dioxide, nickel compounds, and 2,2,6,6-tetramethylpiperidine derivatives. The method further comprises heating the selected thermoplastic pre-preg material and the applied polymer film to a temperature sufficient to form a thermoplastic composite laminate with ultraviolet protection and thereby to form the consolidated thermoplastic composite part.

Other aspects will become apparent from the following detailed description, the accompanying drawings and the appended claims.

### BRIEF DESCRIPTION OF THE DRAWINGS

Fig. 1A is a cross-sectional view of an example hybrid stack of material plies.
Fig. 1B is a cross-sectional view of an example hybrid stack of material plies in accordance with an embodiment.
Fig. 1C is a perspective view of a thermoplastic composite laminate that is formed from the example hybrid stack of material plies of Fig. 1B.
Fig. 2 is a flow diagram illustrating an example method of forming a thermoplastic composite laminate with ultraviolet protection in accordance with an embodiment.
Fig. 3 is a flow diagram illustrating an example method of forming a thermoplastic composite part with ultraviolet protection.
Fig. 4 is a flow diagram of an aircraft manufacturing and service methodology.
Fig. 5 is a block diagram of an aircraft.

### DETAILED DESCRIPTION

The present application is directed to a thermoplastic composite laminate with ultraviolet protection and method of forming the same. The specific thermoplastic composite laminate, forming method, and the industry in which the laminate and the forming method are implemented may vary. It is to be understood that the disclosure below provides a number of embodiments or examples for implementing different features of various embodiments. Specific examples of components and arrangements are described to simplify the present disclosure. These are merely examples and are not intended to be limiting.

By way of example, the disclosure below describes a thermoplastic composite laminate with ultraviolet protection that is used to form a thermoplastic composite part for aircraft. The thermoplastic composite laminate, the method of forming the thermoplastic composite laminate, and the method of forming the thermoplastic composite part may be implemented by an original equipment manufacturer (OEM) for manufacturing thermoplastic composite laminates or thermoplastic composite parts, or both, in compliance with military and space regulations.

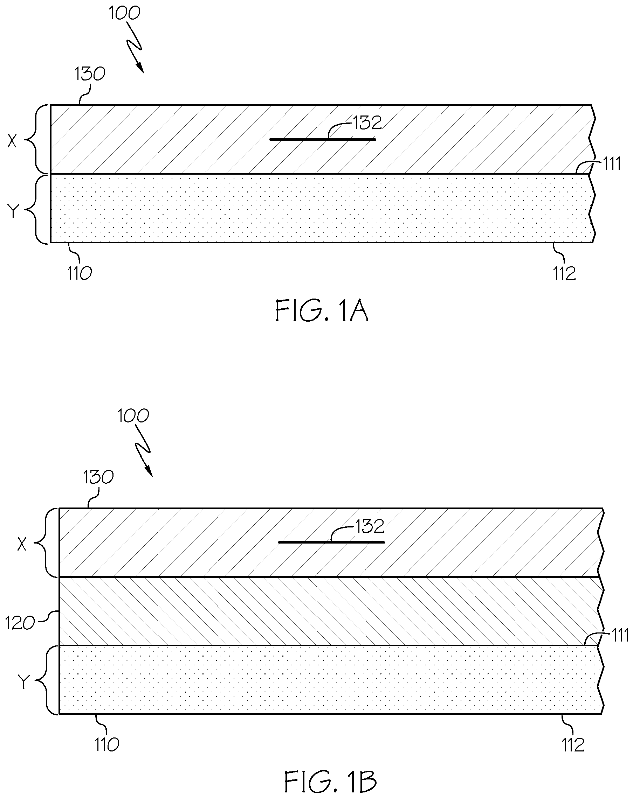

Referring to Fig. 1A, which is not according to the present invention to which this European patent relates, a cross-sectional view of an example hybrid stack 100 of material plies in accordance with an example is illustrated. The hybrid stack 100 includes at least one ply of thermoplastic pre-preg material 110 and a polymer film 130. The at least one ply of thermoplastic pre-preg material 110 includes a first major side 111 and an opposite second major side 112. The polymer film 130 directly contacts the first major side 111 of the at least one ply of thermoplastic pre-preg material 110.

Referring to Fig. 1B, a cross-sectional view of an example hybrid stack 100 of material plies in accordance with an embodiment is illustrated. The hybrid stack 100 includes at least one ply of thermoplastic pre-preg material 110, at least one ply of reinforcement material 120, and a polymer film 130. The at least one ply of thermoplastic pre-preg material 110 includes a first major side 111 and an opposite second major side 112. The at least one ply of reinforcement material 120 is sandwiched between the first major side 111 of the at least one ply of thermoplastic pre-preg material 110 and the polymer film 130.

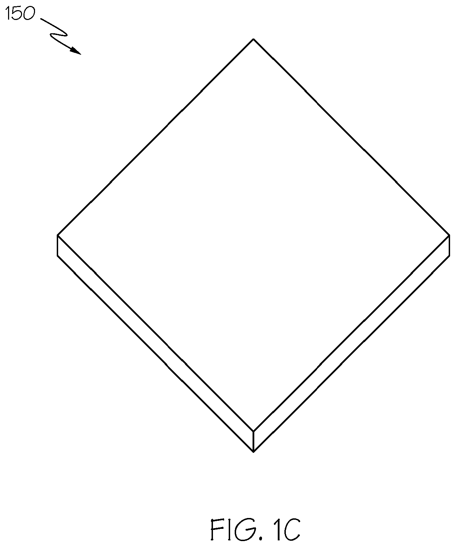

The polymer film 130 and the thermoplastic pre-preg material 110 are heated to a temperature sufficient to consolidate the polymer film 130 and the thermoplastic pre-preg material 110 (and the at least one ply of reinforcement material 120 if provided) to provide a consolidated thermoplastic composite laminate 150 with ultraviolet protection, as shown in Fig. 1C. For simplicity and the purpose of explanation, the embodiment of Fig. 1B will be described in more detail herein.

Compositionally, the thermoplastic pre-preg material 110, which may be single ply or multi-ply, may be formed from various materials or combinations of materials. In some embodiments, the at least one ply of thermoplastic pre-preg material 110 includes a select one of poly ether ether ketone (PEEK), poly ether ketone ketone (PEKK), poly phenylene sulfide (PPS), polyamide (PA), poly ether imide (PEI), and poly aryl ether ketone (PAEK).

In some embodiments, the at least one ply of reinforcement material 120 includes a select one of carbon fiber and glass fiber. Other reinforcement materials are possible.

In some embodiments, the polymer film 130 comprises an ultraviolet stabilizer component in combination with a polymer component that includes, as examples, at least one of poly ether ether ketone (PEEK), poly ether ketone ketone (PEKK), poly phenylene sulfide (PPS), polyamide (PA), poly ether imide (PEI), and poly aryl ether ketone (PAEK). Other polymer components are possible. In some embodiments, the ultraviolet stabilizer component includes a select one of carbon black, titanium dioxide, nickel compounds, and 2,2,6,6-tetramethylpiperidine derivatives. Other ultraviolet stabilizer components are possible.

In some embodiments, the polymer film 130 comprises an optional reinforcement component, which is schematically shown in Fig. 1B (and also Fig. 1A) as a solid line 132. In some embodiments, the optional reinforcement component 132 includes a select one of carbon fiber and glass fiber. Other materials of the reinforcement component are possible.

In some embodiments, a thickness "X" of the polymer film 130 is between about 0.1% and about 15% of the total thickness of the consolidated thermoplastic composite laminate 150 with ultraviolet protection. In some embodiments, the thickness X of the polymer film 130 is between about 2% and about 4% of the total thickness of the consolidated thermoplastic composite laminate 150 with ultraviolet protection.

In some embodiments, the thickness X of the polymer film 130 is between about 0.005 inches and about 0.010 inches. In some embodiments, a thickness "Y" of the at least one ply of thermoplastic pre-preg material 110 is between about 0.001 inches and about 0.014 inches.

The at least one ply of thermoplastic pre-preg material 110, the at least one ply of reinforcement material 120, and the polymer film 130 form the multi-layered hybrid stack 100 (Fig. 1B) that can be formed into the consolidated thermoplastic composite laminate 150 (Fig. 1C). While the multi-layered hybrid stack 100 is shown and described having three plies (i.e., the thermoplastic pre-preg material 110, the reinforcement material 120, and the polymer film 130), additional plies, such as one or more additional thermoplastic pre-preg material plies, one or more additional reinforcement material plies, and/or an additional polymer film ply positioned on the side of the second major side 112 of the thermoplastic pre-preg material 110, may be included in the multi-layered hybrid stack 100 of Fig. 1B without departing from the scope of the present disclosure.

Those skilled in the art will appreciate that only a portion of the hybrid stack 100 that is used to form the thermoplastic composite laminate 150 is shown in Fig. 1C. The overall size and shape of the hybrid stack 100 may depend on the end application. For example, the disclosed hybrid stack 100 may be used to form a thermoplastic composite laminate that is to be used as an aircraft part and, therefore, may be sized, shaped and contoured accordingly. Additionally, while the hybrid stack 100 is shown in Fig. 1 as being a substantially planar structure, non-planar hybrid stacks are also contemplated.

After the hybrid stack 100 of the thermoplastic pre-preg material 110, the reinforcement material 120, and the polymer film 130 has been consolidated, the thermoplastic composite laminate 150 with ultraviolet protection shown in Fig. 1C is provided that is more capable of withstanding ultraviolet degradation damage. After consolidation, the polymer film 130 is visually indistinguishable from the resulting thermoplastic composite laminate 150. The application of the polymer film 130 provides not only ultraviolet protection but also other benefits. For example, the polymer film 130 (after consolidation with the thermoplastic pre-preg material 110) provides a polymer rich surface to which primer and/or paint can be easily applied. Also, the polymer rich surface has a lower melting point, which allows for thermal welding.

As another example, the reinforcement material 120 may comprise an inorganic filler material. The inorganic filler material makes the resulting thermoplastic composite laminate 150 produced less permeable to water, gas, and organic molecules. This is because the inorganic filler material provides a tortuous pathway around which water, gas, and organic molecules must travel in order to permeate the thermoplastic composite laminate 150. Moreover, the reinforcement material 120 could act as an electrical isolation layer, depending upon the particular type of inorganic filler material selected. The electrical isolation feature may be advantageous in some applications. For example, on an aircraft panel, the need for an outer fiberglass layer to prevent galvanic corrosion with contact metal parts can be eliminated by making the aircraft panel with the thermoplastic composite laminate 150 disclosed herein.

The material of the at least one ply of thermoplastic pre-preg material 110 and the material of the polymer film 130 can each be selected and tailored to reduce ultraviolet induced stress in the thermoplastic composite laminate 150 depending upon the particular application of the thermoplastic composite laminate 150.

The following example illustrates a method of thermoplastic forming a composite laminate in accordance with an embodiment. The example thermoplastic forming method is intended to illustrate, but in no way limits, the scope of the invention.

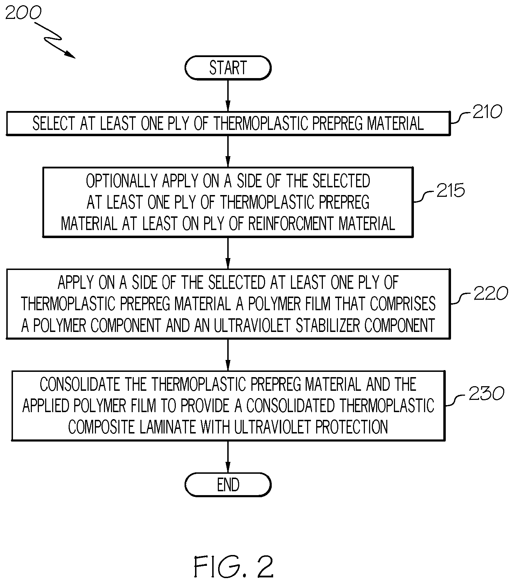

Referring to Fig. 2, a flow diagram 200 illustrating an example method of forming a thermoplastic composite laminate with ultraviolet protection in accordance with an embodiment is illustrated. The thermoplastic forming method 200 disclosed herein may be employed according to FAA regulations, for example. Specifications of FAA regulations for forming thermoplastic composite laminates are known and, therefore, will not be described.

In block 210, at least one ply of thermoplastic pre-preg material is selected. As shown in block 215, at least one ply of reinforcement material is applied on a side of the selected at least one ply of thermoplastic pre-preg material. Then in block 220, a polymer film that comprises a polymer component and an ultraviolet stabilizer component is applied on a side of the selected at least one ply of thermoplastic pre-preg material. The process proceeds to block 230 in which the thermoplastic pre-preg material and the applied polymer film are consolidated to provide the consolidated thermoplastic composite laminate with ultraviolet protection. Due to polymer chain entanglement, there is good adhesion between the polymer film and the at least one ply of thermoplastic pre-preg material. The process then ends.

In some embodiments, the applying on a side of the at least one ply of thermoplastic pre-preg material a polymer film that comprises a polymer component and an ultraviolet stabilizer component includes selecting an ultraviolet protection additive that includes a select one of carbon black, titanium dioxide, nickel compounds, and 2,2,6,6-tetramethylpiperidine derivatives.

In some embodiments, the method further comprises applying on an opposite side of the at least one thermoplastic pre-preg material another polymer film that comprises a polymer component and an ultraviolet stabilizer component.

In some embodiments, the selecting at least one ply of thermoplastic pre-preg material includes selecting a polymer matrix that includes a select one of poly ether ether ketone (PEEK), poly ether ketone ketone (PEKK), poly phenylene sulfide (PPS), polyamide (PA), poly ether imide (PEI), and poly aryl ether ketone (PAEK).

In some embodiments, the applying on a side of the at least one ply of thermoplastic pre-preg material a polymer film that comprises a polymer component and an ultraviolet stabilizer component includes selecting an ultraviolet stabilizer component that is compatible with melting temperature of the selected polymer matrix.

In some embodiments, the consolidating the thermoplastic pre-preg material and the applied polymer film to provide the consolidated thermoplastic composite laminate with ultraviolet protection includes heating the polymer matrix to at least the melting temperature of the selected polymer matrix.

In some embodiments, the consolidating the thermoplastic pre-preg material and the applied polymer film to provide the consolidated thermoplastic composite laminate with ultraviolet protection includes selecting a consolidating process from one of continuous compression molding, press consolidation, stamp forming, autoclave consolidation, and out-of-autoclave consolidation.

The above-described example thermoplastic forming methods may be carried out using manufacturing systems or apparatus suitable for making the thermoplastic composite laminate 150. Numerous manufacturing systems or apparatus for making thermoplastic composite laminates are known and, therefore, will not be described.

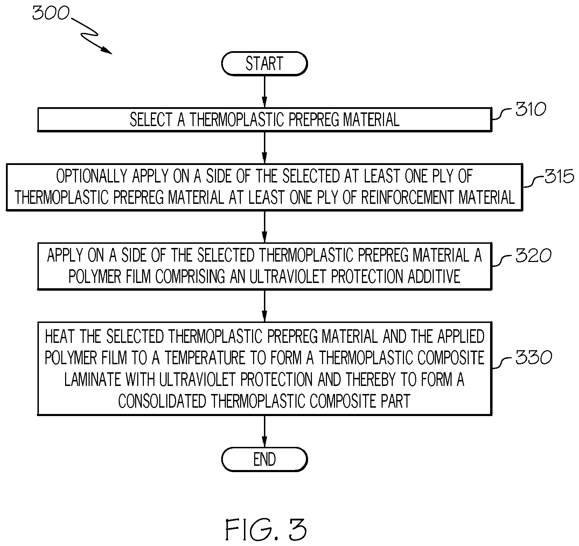

Referring to Fig. 3, which is not according to the present invention to which this European patent relates, a flow diagram 300 illustrating an example method of forming a thermoplastic composite part with ultraviolet protection in accordance with an embodiment is illustrated. The thermoplastic forming method 300 disclosed herein may be employed according to military and space regulations, for example.

In block 310, a thermoplastic pre-preg material is selected. The selected thermoplastic pre-preg material includes a select one of poly ether ether ketone (PEEK), poly ether ketone ketone (PEKK), poly phenylene sulfide (PPS), polyamide (PA), poly ether imide (PEI), and poly aryl ether ketone (PAEK). Optionally, as shown in block 315, at least one ply of reinforcement material is applied on a side of the selected at least one ply of thermoplastic pre-preg material. Then in block 320, a polymer film is applied on a side of the selected thermoplastic pre-preg material. The polymer film comprises an ultraviolet protection additive that includes a select one of carbon black, titanium dioxide, nickel compounds, and 2,2,6,6-tetramethylpiperidine derivatives. The process then proceeds to block 330 in which the selected thermoplastic pre-preg material and the applied polymer film are heated to a temperature sufficient to form a thermoplastic composite laminate with ultraviolet protection and thereby to form the consolidated thermoplastic composite part. The process then ends.

In some embodiments, the method further comprises heating the thermoplastic composite laminate to form a desired shape of the thermoplastic composite part with ultraviolet protection.

In some embodiments, the heating the selected thermoplastic pre-preg material and the applied polymer film to a temperature sufficient to form a thermoplastic composite laminate with ultraviolet protection and thereby to form the consolidated thermoplastic composite part includes heating the selected thermoplastic pre-preg material and the applied polymer film to a temperature between about 200 °C and about 400 °C to melt the thermoplastic pre-preg material.

In some embodiments, the method further comprises adding a reinforcement material to the polymer film before applying the selected polymer film on a side of the selected thermoplastic pre-preg material. As an example, the reinforcement material can be formed as part of the polymer film.

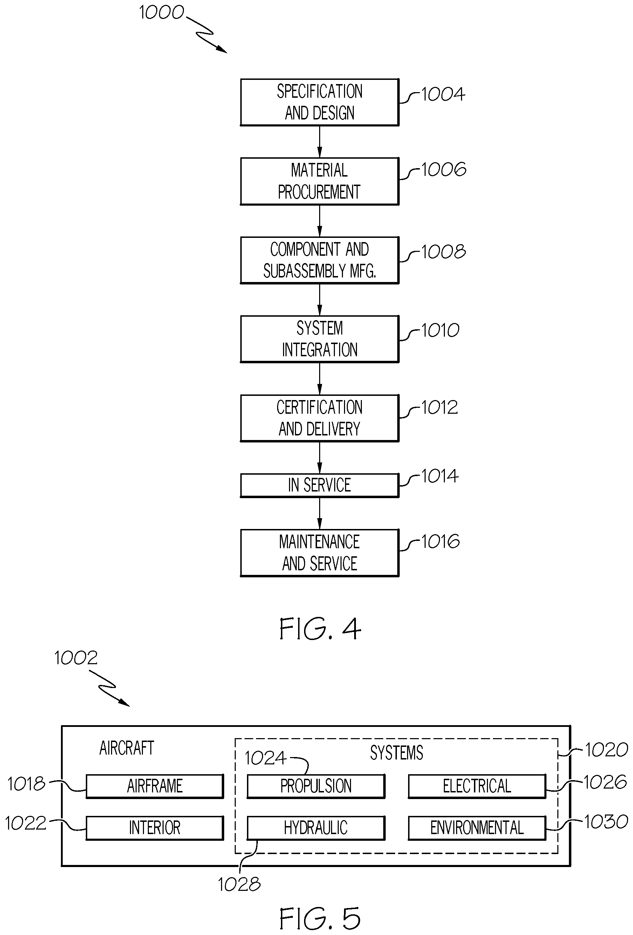

Examples of the present disclosure may be described in the context of an aircraft manufacturing and service method 1000 as shown in Fig. 4 and an aircraft 1002 as shown in Fig. 5. During pre-production, the illustrative method 1000 may include specification and design, as shown at block 1004, of the aircraft 1002 and material procurement, as shown at block 1006. During production, component and subassembly manufacturing, as shown at block 1008, and system integration, as shown at block 1010, of the aircraft 1002 may take place. Thereafter, the aircraft 1002 may go through certification and delivery, as shown block 1012, to be placed in service, as shown at block 1014. While in service, the aircraft 1002 may be scheduled for routine maintenance and service, as shown at block 1016. Routine maintenance and service may include modification, reconfiguration, refurbishment, etc. of one or more systems of the aircraft 1002.

Each of the processes of illustrative method 1000 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 5, the aircraft 1002 produced by illustrative method 1000 (Fig. 4) may include an airframe 1018 with a plurality of high-level systems 1020 and an interior 1022. Examples of high-level systems 1020 may include one or more of propulsion system 1024, electrical system 1026, hydraulic system 1028, and environmental system 1030. Any number of other systems may be included. Thermoplastic composite laminates and thermoplastic forming methods shown or described herein may be employed in any combination of these systems.

Moreover, thermoplastic composite laminates and thermoplastic forming methods shown or described herein may be employed during any one or more of the stages of the manufacturing and service method 1000. For example, components or subassemblies corresponding to component and subassembly manufacturing (block 1008) may be fabricated or manufactured in a manner similar to components or subassemblies produced while aircraft 1002 is in service (block 1014). Also, one or more examples of thermoplastic composite laminates and thermoplastic forming methods, or combination thereof, may be utilized during production stages (blocks 1010 and 1012). Similarly, one more examples of thermoplastic composite laminates and thermoplastic forming methods, or a combination thereof, may be utilized, for example and without limitation, while aircraft 1002 is in service (block 1014) and during maintenance and service stage (block 1016).

It should be apparent that a thermoplastic composite laminate with ultraviolet protection produced in accordance with above-described example methods is suitable for any type of application. The thermoplastic composite laminate with ultraviolet protection is especially advantageous when used to manufacture an aircraft part that is exposed to ultraviolet radiation and subject to ultraviolet degradation damage over its service-life. Example aircraft parts include, but are not limited to, fuselage, wings, empennages, nacelles and the like. The ultraviolet protection reduces ultraviolet induced stress of the aircraft part. As such, the aircraft part is capable of operating at higher temperatures with reduced stress. The result is an aircraft part that does not need to be replaced as often. This lowers maintenance and service costs.

Although an aerospace example is shown, the principles disclosed herein may be applied to other industries, such as the automotive industry, the marine industry, and the construction industry. Accordingly, in addition to the aircraft 1002, the principles disclosed herein may apply to other vehicles (e.g., land vehicles, marine vehicles, space vehicles, etc.) as well as to other types of structures.

Also, although the above description describes example thermoplastic composite laminates, example methods of forming thermoplastic composite laminates, and example methods of forming thermoplastic composite parts for OEMs in accordance with military and space regulations, it is conceivable that the example thermoplastic composite laminates, the example thermoplastic composite parts, and forming methods may be implemented in any industry in accordance with the applicable industry standards.

Further, although various embodiments of the disclosed thermoplastic composite laminate and forming methods have been shown and described, modifications may occur to those skilled in the art upon reading the specification. The present application includes such modifications and is limited only by the scope of the claims.

## Claims

1. A consolidated thermoplastic composite laminate (150) with ultraviolet protection, comprising:
at least one ply of thermoplastic pre-preg material (110);
a polymer film (130) positioned on a side of the at least one ply of thermoplastic pre-preg material (110), wherein the polymer film (130) imparts ultraviolet protection to the thermoplastic pre-preg material (110) after the polymer film (130) and the thermoplastic pre-preg material (110) are heated to a temperature sufficient to consolidate the polymer film (130) and the thermoplastic pre-preg material (110) and thereby to provide the consolidated thermoplastic composite laminate (150) with ultraviolet protection; and
at least one ply of reinforcement material (120) disposed between the polymer film (130) and the at least one ply of thermoplastic pre-preg material (110).

2. The consolidated thermoplastic composite laminate (150) of Claim 1 wherein a thickness of the polymer film (130) is between about 0.005 inches (0.127 millimeters) and about 0.010 inches (0.254 millimeters).

3. The consolidated thermoplastic composite laminate (150) of any of Claims 1 to 2 wherein a thickness of the at least one ply of thermoplastic pre-preg material (110) is between about 0.001 inches (0.025 millimeters) and about 0.014 inches (0.356 millimeters).

4. The consolidated thermoplastic composite laminate (150) of any of Claims 1 to 3 wherein a thickness of the polymer film (130) is between about 0.1% and about 15% of the total thickness of the consolidated thermoplastic composite laminate (150) with ultraviolet protection.

5. The consolidated thermoplastic composite laminate (150) of any of Claims 1 to 4 wherein the thickness of the polymer film (130) is between about 2% and about 4% of the total thickness of the consolidated thermoplastic composite laminate (150) with ultraviolet protection.

6. The consolidated thermoplastic composite laminate (150) of any of Claims 1 to 5 wherein the polymer film (130) comprises an ultraviolet stabilizer component in combination with a polymer component that includes a select one of poly ether ether ketone (PEEK), poly ether ketone ketone (PEKK), poly phenylene sulfide (PPS), polyamide (PA), poly ether imide (PEI), and poly aryl ether ketone (PAEK).

7. The consolidated thermoplastic composite laminate of any of Claims 1 to 6 wherein the polymer film comprises a reinforcement component and wherein the reinforcement component (132) includes a select one of carbon fiber and glass fiber.

8. The consolidated thermoplastic composite laminate of Claim 1 wherein the reinforcement material comprises an inorganic filler material.

9. The consolidated thermoplastic composite laminate (150) of any of Claims 1 to 8 wherein the at least one ply of reinforcement material (120) includes a select one of carbon fiber and glass fiber.

10. A method of forming a consolidated thermoplastic composite laminate (150) with ultraviolet protection of any of claims 1-9, the method comprising:
selecting at least one ply of thermoplastic pre-preg material (110);
applying on a side of the selected at least one ply of thermoplastic pre-preg material (110) at least one ply of reinforcement material (120);
applying on a side of the selected at least one ply of thermoplastic pre-preg material (110) a polymer film (130) that comprises a polymer component and an ultraviolet stabilizer component; and
consolidating the thermoplastic pre-preg material (110) and the applied polymer film (130) to provide the consolidated thermoplastic composite laminate (150) with ultraviolet protection.

11. The method of Claim 10 wherein applying on a side of the selected at least one ply of thermoplastic pre-preg material (110) a polymer film (130) that comprises a polymer component and an ultraviolet stabilizer component includes:
selecting an ultraviolet protection additive that includes a select one of carbon black, titanium dioxide, nickel compounds, and 2,2,6,6-tetramethylpiperidine derivatives.

12. The method of any of Claims 10 to 11 further comprising:
applying on an opposite side of the at least one ply of thermoplastic pre-preg material (110) another polymer film (130) that comprises a polymer component and an ultraviolet stabilizer component.

13. The method of any of Claims 10 to 12 wherein applying on a side of the selected at least one ply of thermoplastic pre-preg material (110) a polymer film (130) that comprises a polymer component and an ultraviolet stabilizer component includes:
selecting an ultraviolet stabilizer component that is compatible with melting temperature of the selected polymer matrix.

14. The method of any of Claims 10 to 13 wherein consolidating the thermoplastic pre-preg material (110) and the applied polymer film (130) to provide the consolidated thermoplastic composite laminate (150) with ultraviolet protection includes:
heating the polymer matrix to at least the melting temperature of the selected polymer matrix.

15. The method of any of Claims 10 to 14 wherein consolidating the thermoplastic pre-preg material (110) and the applied polymer film (130) to provide the consolidated thermoplastic composite laminate (150) with ultraviolet protection includes:
selecting a consolidating process from one of continuous compression molding, press consolidation, stamp forming, autoclave consolidation, and out-of-autoclave consolidation.

## Patentansprüche

1. Verfestigtes thermoplastisches Verbundlaminat (150) mit Ultraviolettschutz, das Folgendes aufweist:
mindestens eine Lage aus thermoplastischem Prepreg-Material (110) ;
eine Polymerfolie (130), die auf einer Seite der mindestens einen Lage aus thermoplastischem Prepreg-Material (110) positioniert ist, wobei die Polymerfolie (130) dem thermoplastischen Prepreg-Material (110) Ultraviolettschutz verleiht, nachdem die Polymerfolie (130) und das thermoplastische Prepreg-Material (110) auf eine Temperatur erwärmt wurden, die ausreicht, um die Polymerfolie (130) und das thermoplastische Prepreg-Material (110) zu verfestigen und dadurch das verfestigte thermoplastische Verbundlaminat (150) mit Ultraviolettschutz zu versehen; und
mindestens eine Lage aus Verstärkungsmaterial (120), die zwischen der Polymerfolie (130) und der mindestens einen Lage aus thermoplastischem Prepreg-Material (110) angeordnet ist.

2. Verfestigtes thermoplastisches Verbundlaminat (150) nach Anspruch 1, wobei eine Dicke der Polymerfolie (130) zwischen etwa 0,005 Zoll (0,127 Millimetern) und etwa 0,010 Zoll (0,254 Millimetern) beträgt.

3. Verfestigtes thermoplastisches Verbundlaminat (150) nach einem der Ansprüche 1 bis 2, wobei eine Dicke der mindestens einen Lage aus thermoplastischem Prepreg-Material (110) zwischen etwa 0,001 Zoll (0,025 Millimetern) und etwa 0,014 Zoll (0,356 Millimetern) beträgt.

4. Verfestigtes thermoplastisches Verbundlaminat (150) nach einem der Ansprüche 1 bis 3, wobei eine Dicke der Polymerfolie (130) zwischen etwa 0,1 % und etwa 15 % der Gesamtdicke des verfestigten thermoplastischen Verbundlaminats (150) mit Ultraviolettschutz beträgt.

5. Verfestigtes thermoplastisches Verbundlaminat (150) nach einem der Ansprüche 1 bis 4, wobei die Dicke der Polymerfolie (130) zwischen etwa 2 % und etwa 4 % der Gesamtdicke des verfestigten thermoplastischen Verbundlaminats (150) mit Ultraviolettschutz beträgt.

6. Verfestigtes thermoplastisches Verbundlaminat (150) nach einem der Ansprüche 1 bis 5, wobei die Polymerfolie (130) einen Ultraviolettstabilisator-Bestandteil in Kombination mit einem Polymerbestandteil aufweist, der eines ausgewählt aus Polyetheretherketon (PEEK), Polyetherketonketon (PEKK), Polyphenylensulfid (PPS), Polyamid (PA), Polyetherimid (PEI) und Polyaryletherketon (PAEK) einschließt.

7. Verfestigtes thermoplastisches Verbundlaminat nach einem der Ansprüche 1 bis 6, wobei die Polymerfolie einen Verstärkungsbestandteil aufweist und wobei der Verstärkungsbestandteil (132) eines ausgewählt aus Kohlenstofffaser und Glasfaser einschließt.

8. Verfestigtes thermoplastisches Verbundlaminat nach Anspruch 1, wobei das Verstärkungsmaterial ein anorganisches Füllstoffmaterial aufweist.

9. Verfestigtes thermoplastisches Verbundlaminat (150) nach einem der Ansprüche 1 bis 8, wobei die mindestens eine Lage aus Verstärkungsmaterial (120) eines ausgewählt aus Kohlefaser und Glasfaser einschließt.

10. Verfahren zum Ausbilden eines verfestigten thermoplastischen Verbundlaminats (150) mit Ultraviolettschutz nach einem der Ansprüche 1 bis 9, wobei das Verfahren Folgendes aufweist:
Auswählen mindestens einer Lage aus thermoplastischem Prepreg-Material (110);
Aufbringen mindestens einer Lage aus Verstärkungsmaterial (120) auf eine Seite der ausgewählten mindestens einen Lage aus thermoplastischem Prepreg-Material (110);
Aufbringen einer Polymerfolie (130), die einen Polymerbestandteil und einen Ultraviolettstabilisator-Bestandteil aufweist, auf eine Seite der ausgewählten mindestens einen Lage aus thermoplastischem Prepreg-Material (110); und
Verfestigen des thermoplastischen Prepreg-Materials (110) und der aufgebrachten Polymerfolie (130), um das verfestigte thermoplastische Verbundlaminat (150) mit Ultraviolettschutz zu versehen.

11. Verfahren nach Anspruch 10, wobei das Aufbringen einer Polymerfolie (130), die einen Polymerbestandteil und einen Ultraviolettstabilisator-Bestandteil aufweist, auf eine Seite der ausgewählten mindestens einen Lage aus thermoplastischem Prepreg-Material (110) Folgendes einschließt:
Auswählen eines Ultraviolettschutz-Additivs, das eines ausgewählt aus Industrieruß, Titandioxid, Nickelverbindungen und 2,2,6,6-Tetramethylpiperidinderivaten einschließt.

12. Verfahren nach einem der Ansprüche 10 bis 11, ferner aufweisend:
Aufbringen einer weiteren Polymerfolie (130), die einen Polymerbestandteil und einen Ultraviolettstabilisator-Bestandteil aufweist, auf eine gegenüberliegende Seite der mindestens einen Lage aus thermoplastischem Prepreg-Material (110) .

13. Verfahren nach einem der Ansprüche 10 bis 12, wobei das Aufbringen einer Polymerfolie (130), die einen Polymerbestandteil und einen Ultraviolettstabilisator-Bestandteil aufweist, auf eine Seite der ausgewählten mindestens einen Lage aus thermoplastischem Prepreg-Material (110) Folgendes einschließt:
Auswählen eines Ultraviolettstabilisator-Bestandteils, der mit der Schmelztemperatur der ausgewählten Polymermatrix kompatibel ist.

14. Verfahren nach einem der Ansprüche 10 bis 13, wobei das Verfestigen des thermoplastischen Prepreg-Materials (110) und der aufgebrachten Polymerfolie (130), um das verfestigte thermoplastische Verbundlaminat (150) mit Ultraviolettschutz zu versehen, Folgendes einschließt:
Erwärmen der Polymermatrix auf mindestens die Schmelztemperatur der ausgewählten Polymermatrix.

15. Verfahren nach einem der Ansprüche 10 bis 14, wobei das Verfestigen des thermoplastischen Prepreg-Materials (110) und der aufgebrachten Polymerfolie (130), um das verfestigte thermoplastische Verbundlaminat (150) mit Ultraviolettschutz zu versehen, Folgendes einschließt:
Auswählen eines Verfestigungsverfahrens aus Continuous Compression Molding, Druckverfestigung, Pressformen, Verfestigung im Autoklav und Verfestigung außerhalb des Autoklavs.

## Revendications

1. Stratifié composite thermoplastique consolidé (150) ayant une protection contre les ultraviolets, ledit stratifié comprenant :
au moins un pli de matériau préimprégné thermoplastique (110) ;
un film polymère (130) positionné sur un côté de l'au moins un pli du matériau préimprégné thermoplastique (110), stratifié dans lequel le film polymère (130) confère, au matériau préimprégné thermoplastique (110), une protection contre les ultraviolets, après que le film polymère (130) et le matériau préimprégné thermoplastique (110) ont été chauffés à une température suffisante pour consolider le film polymère (130) et le matériau préimprégné thermoplastique (110), et permettant ainsi de fournir le stratifié composite thermoplastique consolidé (150) ayant une protection contre les ultraviolets ; et
au moins un pli de matériau de renfort (120), ledit pli étant disposé entre le film polymère (130) et l'au moins un pli du matériau préimprégné thermoplastique (110).

2. Stratifié composite thermoplastique consolidé (150) selon la revendication 1, dans lequel une épaisseur du film polymère (130) est comprise entre environ 0,005 pouce (0,127 millimètre) et environ 0,010 pouce (0,254 millimètre).

3. Stratifié composite thermoplastique consolidé (150) selon l'une des revendications 1 à 2, dans lequel une épaisseur de l'au moins un pli du matériau préimprégné thermoplastique (110) est comprise entre environ 0,001 pouce (0,025 millimètre) et environ 0,014 pouce (0,356 millimètre).

4. Stratifié composite thermoplastique consolidé (150) selon l'une quelconque des revendications 1 à 3, dans lequel une épaisseur du film polymère (130) est comprise entre environ 0,1 % et environ 15 % de l'épaisseur totale du stratifié composite thermoplastique consolidé (150) ayant une protection contre les ultraviolets.

5. Stratifié composite thermoplastique consolidé (150) selon l'une quelconque des revendications 1 à 4, dans lequel l'épaisseur du film polymère (130) est comprise entre environ 2 % et environ 4 % de l'épaisseur totale du stratifié composite thermoplastique consolidé (150) ayant une protection contre les ultraviolets.

6. Stratifié composite thermoplastique consolidé (150) selon l'une quelconque des revendications 1 à 5, dans lequel le film polymère (130) comprend un composant stabilisateur d'ultraviolets associé de façon combinée à un composant polymère qui comprend un composant sélectionné parmi l'un de ceux tels que du polyétheréthercétone (PEEK), du polyéthercétonecétone (PEKK), du sulfure de polyphénylène (PPS), du polyamide (PA), du polyétherimide (PEI) et du polyaryléthercétone (PAEK).

7. Stratifié composite thermoplastique consolidé selon l'une quelconque des revendications 1 à 6, dans lequel le film polymère comprend un composant de renfort, et stratifié dans lequel le composant de renfort (132) comprend une fibre sélectionnée parmi l'une de celles telles que de la fibre de carbone et de la fibre de verre.

8. Stratifié composite thermoplastique consolidé selon la revendication 1, dans lequel le matériau de renfort comprend un matériau de charge inorganique.

9. Stratifié composite thermoplastique consolidé (150) selon l'une quelconque des revendications 1 à 8, dans lequel l'au moins un pli du matériau de renfort (120) comprend une fibre sélectionnée parmi l'une de celles telles que de la fibre de carbone et de la fibre de verre.

10. Procédé de formage d'un stratifié composite thermoplastique consolidé (150) ayant une protection contre les ultraviolets selon l'une quelconque des revendications 1 à 9, ledit procédé comprenant :
la sélection d'au moins un pli de matériau préimprégné thermoplastique (110) ;
l'application d'au moins un pli de matériau de renfort (120) sur un côté de l'au moins un pli sélectionné du matériau préimprégné thermoplastique (110) ;
l'application d'un film polymère (130) sur un côté de l'au moins un pli sélectionné du matériau préimprégné thermoplastique (110), film polymère qui comprend un composant polymère et un composant stabilisateur d'ultraviolets ; et
la consolidation du matériau préimprégné thermoplastique (110) et du film polymère (130) ayant été appliqué, afin de fournir le stratifié composite thermoplastique consolidé (150) ayant une protection contre les ultraviolets.

11. Procédé selon la revendication 10, dans lequel le fait d'appliquer un film polymère (130) sur un côté de l'au moins un pli sélectionné du matériau préimprégné thermoplastique (110), ledit film polymère comprenant un composant polymère et un composant stabilisateur d'ultraviolets, comprend :
la sélection d'un additif de protection contre les ultraviolets, ladite sélection comprenant un additif sélectionné parmi l'un de ceux tels que du noir de carbone, du dioxyde de titane, des composés de nickel et des dérivés de 2,2,6,6-tétraméthylpipéridine.

12. Procédé selon l'une des revendications 10 à 11, comprenant en outre :
l'application d'un autre film polymère (130) sur un côté opposé de l'au moins un pli du matériau préimprégné thermoplastique (110), autre film polymère qui comprend un composant polymère et un composant stabilisateur d'ultraviolets.

13. Procédé selon l'une quelconque des revendications 10 à 12, dans lequel le fait d'appliquer un film polymère (130) sur un côté de l'au moins un pli sélectionné du matériau préimprégné thermoplastique (110), ledit film polymère comprenant un composant polymère et un composant stabilisateur d'ultraviolets, comprend :
la sélection d'un composant stabilisateur d'ultraviolets qui est compatible avec une température de fusion de la matrice polymère sélectionnée.

14. Procédé selon l'une quelconque des revendications 10 à 13, dans lequel le fait de consolider le matériau préimprégné thermoplastique (110) et le film polymère (130) ayant été appliqué, afin de fournir le stratifié composite thermoplastique consolidé (150) ayant une protection contre les ultraviolets, comprend :
le chauffage de la matrice polymère à au moins la température de fusion de la matrice polymère sélectionnée.

15. Procédé selon l'une quelconque des revendications 10 à 14, dans lequel le fait de consolider le matériau préimprégné thermoplastique (110) et le film polymère (130) ayant été appliqué, afin de fournir le stratifié composite thermoplastique consolidé (150) ayant une protection contre les ultraviolets, comprend :
la sélection d'un processus de consolidation parmi l'un de ceux tels que le moulage par compression continue, la consolidation à la presse, le formage par estampage, la consolidation en autoclave et la consolidation hors autoclave.
